# FASCICULE DE BREVET EUROPEEN

(11) **EP 2 202 387 B1**
(45) Date de publication et mention de la délivrance du brevet: **22.08.2012**
(21) Numéro de dépôt: 08172853.7
(22) Date de dépôt: 23.12.2008
(51) Int. Cl.: F01D 25/20, F02C 7/06, F16K 17/04

(54) **Vanne d'isolation du circuit d'huile sans commande dans un moteur d'avion**
Absperrventil für steuerlosen Ölkreislauf in einem Flugzeugmotor
Control-free isolation valve for the oil circuit of an airplane engine

(43) Date de publication de la demande: 30.06.2010
(73) Titulaire: Techspace Aero S.A., 4041 Milmort (BE)
(72) Inventeur: Cornet, Albert, B-4800, Verviers (BE); Monfort, Marc, B-4845 Jalhay (BE); Descubes, Olivier, 64000 Pau (FR); Detry, Sébastien, 64000 Pau (FR)
(74) Mandataire: pronovem

(56) Documents cités:
- DE-B- 1 108 027
- DE-U1- 29 619 824
- GB-A- 589 095
- JP-U- 62 149 680
- US-A- 2 830 767
- US-A- 4 245 465
- US-B1- 6 263 913

## Description

### Objet de l'invention

La présente invention se rapporte à une vanne de fermeture et d'isolation sans commande du circuit d'huile dans un moteur aéronautique, en particulier dans un turboréacteur ou un turbopropulseur.

### Etat de la technique

Sur certains turboréacteurs, il est intéressant, lors de l'arrêt de la machine, de stopper ou de réduire l'arrivée d'huile vers les enceintes de palier avant l'arrêt complet de la machine, afin de permettre un assèchement complet de ces enceintes durant la fin de la rotation. En effet, sur ces machines, l'huile est envoyée vers les enceintes par une pompe, la pompe d'alimentation, et récupérée au fond de ces enceintes par une autre pompe, la pompe de récupération. Ces deux pompes étant de type volumétrique et entraînées par l'arbre principal du moteur, ou arbre HP, elles continuent à fonctionner jusqu'à l'arrêt total de cet arbre.

Dans certains cas, un déséquilibre peut apparaître entre l'huile apportée par la pompe d'alimentation et la ou les pompes de récupération, ce qui peut provoquer l'apparition d'excès d'huile dans l'enceinte, et provoquer des fuites.

Ce déséquilibre peut aussi induire une stagnation d'huile dans les enceintes lors de périodes d'arrêt du moteur, et peut provoquer la cokéfaction de l'huile stagnante, spécialement sur les moteurs possédant une ou des enceintes particulièrement chaudes, ou particulièrement sensibles au phénomène appelé « Soak Back », de réchauffement temporaire des organes mécaniques lors de l'arrêt.

Le document US-A-4,170,873 décrit un système comportant 2 vannes, l'une de sécurité et l'autre de régulation, permettant de contrôler le débit d'huile d'alimentation des enceintes de palier lors des phases de fonctionnement à bas régime. Ces vannes sont contrôlées par la pression dans les différents circuits.

Le document US-A-4,245,465 décrit une vanne à 3 fonctions permettant d'une part de réduire le débit d'huile d'alimentation des enceintes de palier lors des phases de fonctionnement à bas régime, de couper l'alimentation d'huile vers les enceintes à très bas régime, et de réguler le débit d'huile à haut régime. Cette vanne laisse en permanence passer un débit d'huile vers le réservoir d'huile ; elle ne laisse donc jamais passer le plein débit vers le moteur.

Les dispositifs dits « anti-siphon », prévus pour bloquer toute fuite du réservoir au travers de la pompe vers les points bas du moteur pendant les périodes d'inactivité entrant en fonction dans les derniers tours de la rotation du moteur, peuvent participer à la réduction de la quantité d'huile stagnante. Ils agissent en refermant soit la liaison du réservoir d'huile vers la pompe d'alimentation, soit en fermant la sortie de la pompe sous une certaine pression.

Quels que soient les procédés « anti-siphon » utilisés, ceux-ci ont la caractéristique commune d'agir très tard lors de l'arrêt, voire après l'arrêt total, et si ce n'est le cas, de retarder parfois de façon significative l'amorçage au redémarrage. La reprise de l'alimentation en huile lors du redémarrage arrive alors systématiquement à un régime significativement plus élevé que celui auquel le débit a été stoppé lors de l'arrêt. Bien plus, le réglage de tels dispositifs pour obtenir une coupure à un régime significatif lors de l'arrêt, pour obtenir un bon assèchement, pourrait mener à rendre le réamorçage de la pompe impossible au redémarrage. Certains dispositifs « anti - siphon » ne présentent pas cet inconvénient, mais ils reposent alors sur un système de commande plus ou moins complexe, souvent consommateur d'huile, et inutile sur beaucoup de moteurs.

Aucun de ces systèmes ne permet d'éviter de manière efficace la stagnation d'huile dans les enceintes lors des phases d'arrêt du moteur. En particulier, aucun de ces systèmes ne décrit de dispositif permettant d'éviter le phénomène de cokéfaction de l'huile stagnante.

### Buts de l'invention

La présente invention vise à fournir une solution aux inconvénients de l'état de la technique.

En particulier, l'invention vise à fournir un moyen plus simple et plus léger que les dispositifs connus dans l'état de la technique (dispositifs « anti-siphon », US-A-4,245,465, US-A-4,170,873, etc.), pouvant agir à un moment quelconque de la phase d'arrêt du moteur et permettant, au redémarrage, de reprendre l'alimentation à un régime égal ou très proche de celui auquel le débit a été stoppé lors de l'arrêt.

De plus, la présente invention a pour but d'atteindre cet objectif avec une vanne compacte et simple, exempte de commande compliquée, et peu sensible aux frottements et à la pollution.

### Principaux éléments caractéristiques de l'invention

Un premier aspect de la présente invention concerne un système de lubrification en circuit fermé, pour moteur aéronautique, comprenant:
- une pompe d'alimentation ;
- un réservoir d'huile ;
- un circuit d'alimentation amenant de l'huile vers des enceintes contenant des éléments à lubrifier;
- un circuit de récupération ramenant l'huile des enceintes vers le réservoir ;
- un circuit de dérivation ou « by-pass » ramenant l'huile de la sortie de la pompe d'alimentation vers le réservoir ou vers l'entrée de la pompe d'alimentation ;
- une vanne à deux positions, appelées respectivement première et seconde position, et à trois voies, lesdites trois voies étant constituées d'une entrée IN, d'une première sortie BP et d'une seconde sortie M, ladite entrée IN étant branchée à la sortie de la pompe d'alimentation, la première sortie BP étant branchée au circuit de dérivation et la seconde sortie M au circuit d'alimentation ;
**caractérisé en ce que**, dans la première position, tout le débit entrant par l'entrée IN est dévié vers la première sortie BP et, dans la seconde position, tout le débit entrant est dévié vers la seconde sortie M, ladite vanne basculant de la première position à la seconde position et vice versa lorsque le débit entrant dépasse un seuil prédéterminé respectivement à la hausse et à la baisse.

Selon des modes préférés d'exécution de l'invention, le système de lubrification comporte au moins une, ou une combinaison quelconque appropriée, des caractéristiques suivantes :
- ladite vanne comporte une soupape coulissant avec un faible jeu dans un alésage usiné dans un corps de vanne entre deux sièges opposés, un premier siège étant en communication avec l'entrée IN et un second siège avec la sortie BP, la sortie M débouchant dans l'alésage sur une cavité annulaire entourant le premier siège, de manière telle que :
   - pour un débit en entrée IN inférieur au seuil prédéterminé, la soupape est poussée par un ressort sur le premier siège contrôlant l'entrée IN et le passage de l'entrée IN vers la cavité annulaire est bloqué, le passage étant ouvert vers la sortie BP au travers d'au moins un orifice calibré perçant la soupape et débouchant latéralement dans l'alésage à l'amont du siège de la sortie BP ;
   - pour un débit de l'entrée IN supérieur ou égal au seuil prédéterminé, la soupape se déplace vers le second siège dans une position où elle est à butée contre le second siège, fermant la sortie BP et où l'entrée IN est en communication avec la sortie M au travers de la cavité annulaire, le premier siège étant libéré par le déplacement de la soupape ;
- la soupape est réalisée en au moins deux pièces qui se poussent mutuellement ;
- l'étanchéité d'une sortie quelconque ou des deux sorties de la vanne est réalisée par un principe de recouvrement de type tiroir remplaçant le contact siège-soupape ;
- ladite vanne comporte une soupape coulissant dans un alésage entre deux sièges opposés, un premier siège communiquant avec la sortie M et un second siège communiquant avec la sortie BP, l'entrée IN débouchant dans l'alésage sur une cavité annulaire entourant le premier siège et l'alésage ou la soupape comprenant au moins un canal calibré entre les deux sièges, les éléments de ladite vanne étant dimensionnés de manière telle que :
   - pour un débit de l'entrée IN inférieur au seuil prédéterminé, un ressort maintient ladite soupape à butée contre le premier siège, fermant la sortie M, le débit étant dévié vers la sortie BP ;
   - pour un débit de l'entrée IN supérieur ou égal au seuil prédéterminé, ladite soupape se déplace vers le second siège, ouvrant la sortie M et fermant la sortie BP ;
- la soupape est sphérique.

Un deuxième aspect de l'invention concerne un moteur aéronautique comprenant un système de lubrification tel que décrit ci-dessus. Ce moteur est par exemple un turboréacteur, un turbopropulseur ou un turboshaft ou moteur d'hélicoptère.

Avantageusement, dans un tel moteur, ledit système de lubrification et ladite vanne sont localisés dans un même carter.

### Brève description des figures

Les figures 1A et 1B représentent une vanne selon une première forme particulière de réalisation de l'invention.

Les figures 2A et 2B représentent une vanne selon une deuxième forme particulière de réalisation de l'invention.

Les figures 3A et 3B représentent une vanne selon une troisième forme particulière de réalisation de l'invention.

Les figures 4A et 4B représentent une vanne selon une quatrième forme particulière de réalisation de l'invention.

Les figures 5A et 5B représentent une vanne selon une cinquième forme particulière de réalisation de l'invention.

La figure 6 représente schématiquement un système de lubrification selon la présente invention.

La figure 7 représente le schéma de principe d'un moteur aéronautique muni d'une vanne d'isolation du circuit d'huile sans commande selon la présente invention.

### Description détaillée de l'invention

Selon la présente invention, on stoppe le débit allant de la pompe d'alimentation vers le moteur avant l'arrêt total de celui-ci, tout en laissant fonctionner normalement les pompes de récupération. A partir de ce moment, les pompes de récupération vont assécher efficacement les enceintes puisqu'elles continuent d'aspirer l'huile s'écoulant des organes et parois mouillés, sans que de la nouvelle huile soit apportée.

Dans le cas d'une telle interruption du débit d'alimentation pendant l'arrêt, il faut néanmoins veiller à réalimenter le moteur suffisamment tôt au redémarrage.

Cet arrêt du débit d'alimentation d'huile, pendant l'arrêt du moteur, permet ainsi de lutter contre la cokéfaction dans les moteurs aéronautiques.

Dans la présente invention, cette fonction d'arrêt de l'alimentation des enceintes est réalisée au moyen d'une vanne d'isolation et "by-pass" (dérivation). Cette vanne comporte trois voies et deux positions. Elle est placée à la sortie de la pompe d'alimentation (voie IN), et dévie le débit de la pompe vers le réservoir ou l'entrée de la pompe (voie BP, pour « by-pass ») lorsque ce débit est faible, tout en fermant la communication vers le moteur (voie M). Lorsque le débit de la pompe atteint un seuil prédéterminé, elle dévie ce débit vers le moteur (voie M) et referme la communication vers le réservoir ou l'entrée de la pompe (voie BP).

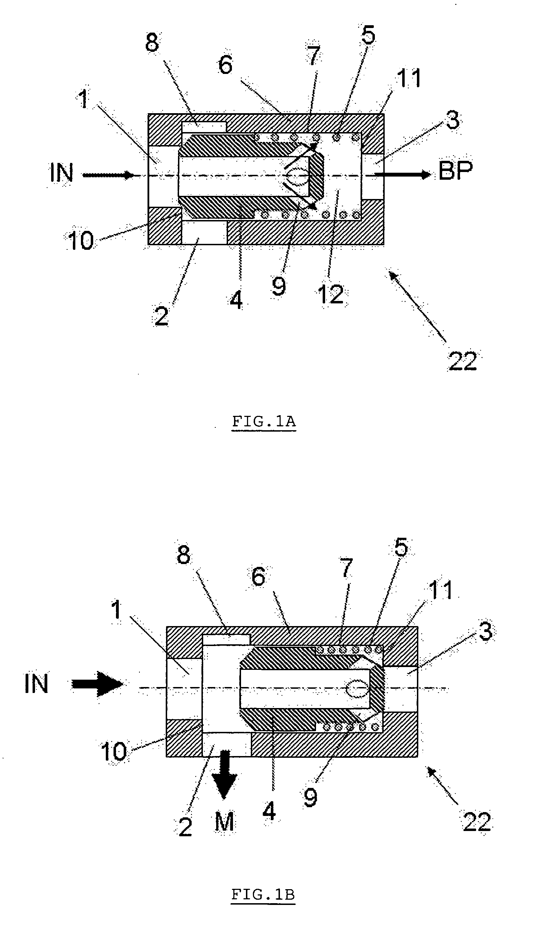

Des formes d'exécution particulières de la vanne selon l'invention sont représentées dans les figures 1A, 1B, 2A, 2B, 3A, 3B, 4A, 4B, 5A et 5B.

Dans une première forme particulière de réalisation de l'invention représentée aux figures 1A et 1B, la vanne est composée d'une soupape 4 coulissant avec faible jeu dans un alésage 7, entre deux sièges opposés 10, 11. L'un est en communication avec la voie IN, l'autre avec la voie BP. La voie M débouche sur une cavité annulaire 8 entourant le siège IN.

Au repos, ou tant que le débit par la voie IN est inférieure à un seuil prédéterminé, la soupape 4 est poussée par un ressort 5 vers le siège 10 contrôlant la voie IN et le passage de l'entrée IN vers la sortie annulaire 8 débouchant sur la voie M est bloqué (figure 1A). Le passage est par contre possible vers BP, au travers de l'orifice calibré 9 débouchant dans la cavité 12 définie par l'alésage 7 à l'amont du siège 11 de la voie BP.

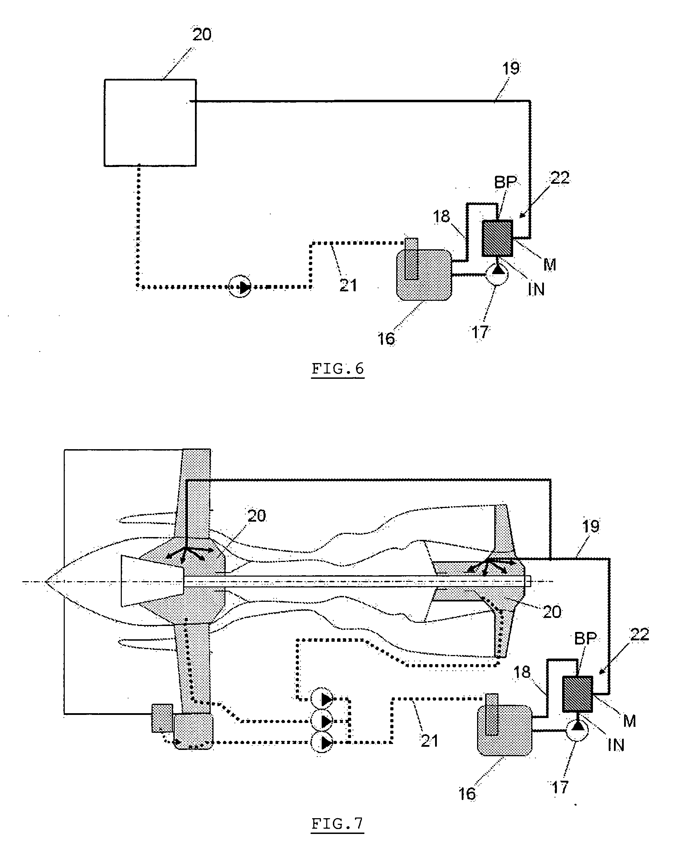

La pression de la voie IN s'applique donc sur la face de la soupape en appui sur le siège 10. Comme la voie BP est en communication avec le réservoir 16 ou l'entrée de la pompe, elle est à pression réputée nulle, et la pression de la voie IN est contrôlée par le débit de la voie IN, commandé par la pompe volumétrique d'alimentation 17 (figures 6 et 7) et passant par le canal de communication 9, dont la résistance hydraulique est calibrée. Quand la force exercée par cette pression sur la soupape 4 est inférieure à la charge du ressort 5, la soupape vient s'appuyer contre le siège 10 de la voie IN et ferme la voie M (figure 1A).

Quand, suite à l'augmentation du débit de la pompe, cette pression devient supérieure à la charge du ressort 5 dans cette position, la soupape se déplace vers l'autre siège, créant une résistance hydraulique supplémentaire au débit, et accroissant le différentiel de pression appliqué à la soupape 4. Ce fonctionnement est vérifié pour peu que la voie M offre une résistance hydraulique non négligeable (ce qui est généralement le cas sur les moteurs aéronautiques) et que celle du canal de communication 9 entre les deux sièges 10, 11 y soit bien adaptée.

Aux débits supérieurs, la soupape 4 vient à butée sur le siège 11 débouchant sur la voie BP, qui est alors complètement fermée, et la pression du circuit moteur s'applique sur toute la face de la soupape 4 du côté de la voie M, qui est verrouillée dans cette position par la pression (figure 1B). Lors d'une chute de débit, la diminution de pression résultante permet au ressort de repousser la soupape vers sa position d'origine (figure 1A).

Les valeurs de basculement dans un sens et l'autre, l'hystérésis fonctionnelle et la stabilité sont contrôlées par les rapports de surface des sièges, la précharge, la course et la raideur du ressort 5 et le rapport de la résistance hydraulique du canal 9 de communication vis-à-vis de celle de la voie M.

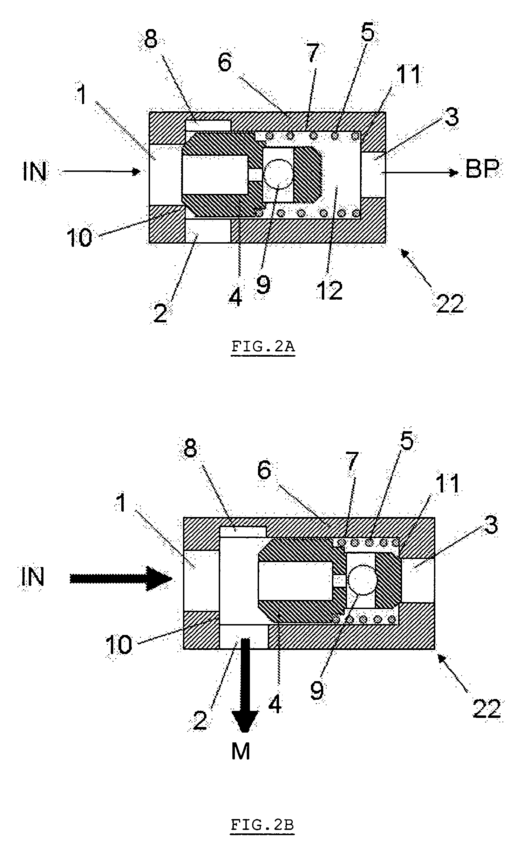

Dans d'autres formes de réalisation particulières de l'invention :
- la soupape peut avoir une forme quelconque, tant que les principes hydrauliques précités sont respectés ;
- la soupape pourrait être réalisée en deux ou plusieurs pièces plus ou moins solidaires et se poussant mutuellement ;
- le canal de communication peut être réalisé de diverses façons (voir une alternative aux figures 2A et 2B).

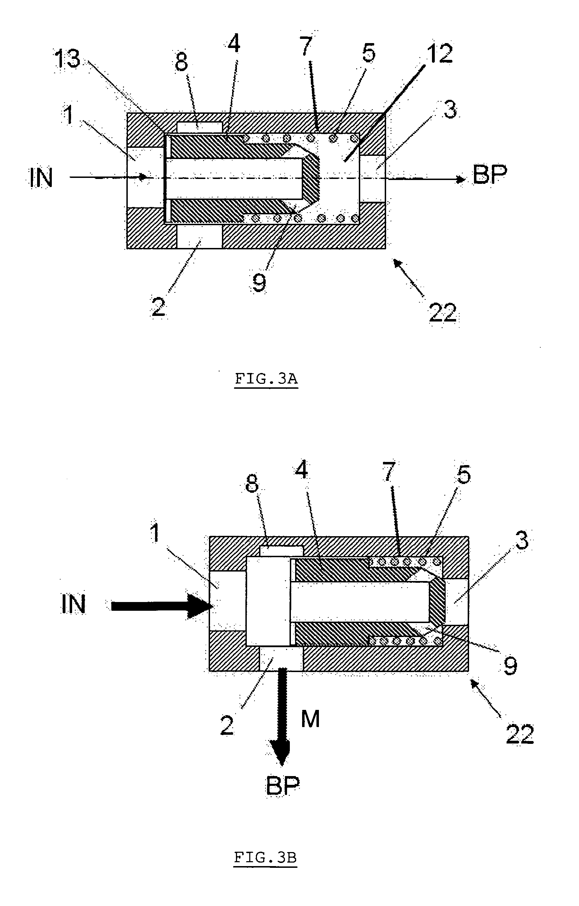

L'étanchéité d'une sortie quelconque de la vanne selon l'invention ou des deux pourrait aussi être réalisée par un principe de recouvrement de type tiroir 13, et non un contact siège-soupape-clapet. Ce principe, est illustré sur les figures 3A et 3B.

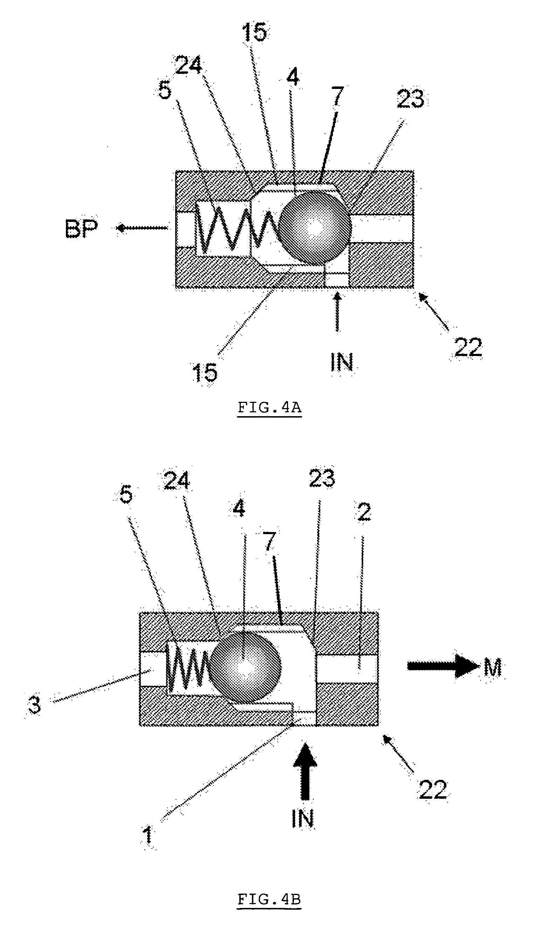

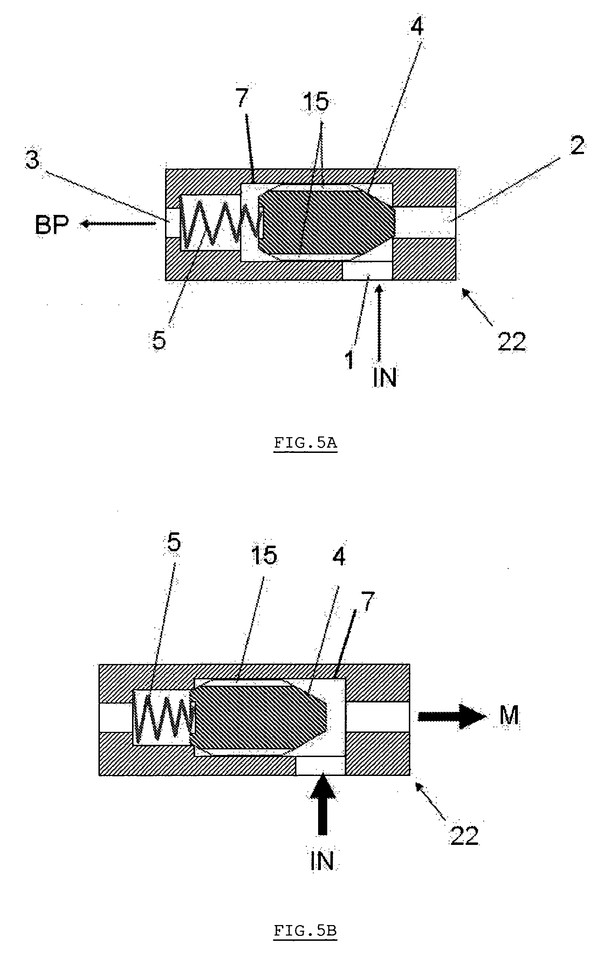

Dans une autre forme d'exécution alternative, représentée sur les figures 4A, 4B, 5A et 5B, la vanne est composée d'une soupape 4, coulissant dans un alésage 7, entre deux sièges 23, 24. Selon sa position, et le siège sur lequel elle prend appui, elle ouvre ou ferme la communication vers les voies BP ou M. Au repos (figure 4A et 5A), la soupape 4 est poussée par un ressort 5 vers le siège 23 contrôlant la voie M qu'elle ferme. La soupape 4 ou l'alésage 7 est en outre doté d'un ou plusieurs passages calibrés 15 permettant la communication entre les zones annulaires situées autour des sièges 23, 24 de part et d'autre de la soupape 4. La voie IN débouche, via l'alésage 7, dans l'espace annulaire entourant le siège 23 de la voie M. La pression de la voie IN s'applique donc sur la surface annulaire de la soupape en périphérie du siège 23. Comme cette zone est en communication avec la voie BP, ouverte, au moyen du canal calibré 15, le débit s'écoule de la voie IN vers la voie BP, la voie M étant fermée par le ressort 5. Comme la voie BP est en communication avec le réservoir 16 ou l'entrée de la pompe 17 (figures 6 et 7), elle est à pression réputée nulle, et la pression de la zone annulaire de la soupape 4 autour du siège 23 de la voie M est contrôlée par le débit passant par le canal de communication 15. Quand la force exercée par cette pression sur la soupape 4 est inférieure à la charge du ressort 5, la soupape 4 reste appuyée contre le siège 23 de la voie M et la maintient fermée (figure 4A). Quand, suite à l'augmentation du débit de la pompe 17, cette pression devient supérieure à la charge du ressort 5 dans cette position, la soupape se déplace vers l'autre siège 24, créant une résistance hydraulique supplémentaire au débit, et accroissant le différentiel de pression appliqué à la soupape 4. En même temps, le débit commence à passer vers la voie M, et la pression IN s'étend progressivement à une plus grande surface de la soupape, accentuant le déséquilibre. Ce fonctionnement est vérifié pour peu que la voie M offre une résistance hydraulique non négligeable (ce qui est généralement le cas sur des moteurs), et que celle du canal de communication 15 entre les deux sièges 23, 24 y soit bien adaptée. Aux débits supérieurs, la soupape 4 est à butée contre le siège 24 de la voie BP, qui est complètement fermée, et la pression du circuit moteur s'applique sur toute la face de la soupape du côté M, qui est verrouillée dans cette position par la pression (figure 4B). Lors de la chute de débit, la diminution de pression permet au ressort 5 de repousser la soupape 4 vers sa position d'origine (figure 4A). Les valeurs de basculement dans un sens et l'autre, l'hystérésis fonctionnelle, la stabilité sont contrôlées par les rapport de surface des sièges, la précharge, la course et la raideur du ressort 5 et le rapport de la résistance hydraulique du canal de communication 15 vis-à-vis de celle de la voie M.

Dans une forme de réalisation de l'invention, la soupape 4 a une forme sphérique, telle que représentée sur les figures 4A et 4B.

Dans des formes de réalisations particulières de la présente invention, la communication calibrée entre les 2 côtés peut avantageusement être réalisée dans la soupape elle-même tel que représenté sur les figures 5A et 5B, par des rainures dans l'alésage, ou même via un canal externe.

## Revendications

1. Un système de lubrification en circuit fermé, pour moteur aéronautique, comprenant:
- une pompe d'alimentation (17);
- un réservoir d'huile (16);
- un circuit d'alimentation (19) amenant de l'huile vers des enceintes (20) contenant des éléments à lubrifier;
- un circuit de récupération (21) ramenant l'huile des enceintes (20) vers le réservoir (16);
- un circuit de dérivation ou « by-pass » (18) ramenant l'huile de la sortie de la pompe d'alimentation (17) vers le réservoir (16) ou vers l'entrée de la pompe d'alimentation (17);
- une vanne (22) à deux positions, appelées respectivement première et seconde position, et à trois voies, lesdites trois voies étant constituées d'une entrée IN (1), d'une première sortie BP (3) et d'une seconde sortie M (2), ladite entrée IN (1) étant branchée à la sortie de la pompe d'alimentation (17), la première sortie BP (3) étant branchée au circuit de dérivation (18) et la seconde sortie M (2) au circuit d'alimentation (19);
**caractérisé en ce que**, dans la première position, tout le débit entrant par l'entrée IN (1) est dévié vers la première sortie BP (3) et, dans la seconde position, tout le débit entrant est dévié vers la seconde sortie M (2), ladite vanne basculant de la première position à la seconde position et vice versa, lorsque le débit entrant dépasse un seuil prédéterminé respectivement à la hausse et à la baisse.

2. Système de lubrification selon la revendication 1, **caractérisé en ce que** ladite vanne (22) comporte une soupape (4) coulissant avec un faible jeu dans un alésage (7) usiné dans un corps de vanne (6) entre deux sièges opposés (10, 11), un premier siège (10) étant en communication avec l'entrée IN (1) et un second siège (11) avec la sortie BP (3), la sortie M (2) débouchant dans l'alésage (7) sur une cavité annulaire (8) entourant le premier siège (10), de manière telle que :
a. pour un débit en entrée IN (1) inférieur au seuil prédéterminé, la soupape (4) est poussée par un ressort (5) sur le premier siège (10) contrôlant l'entrée IN (1) et le passage de l'entrée IN (1) vers la cavité annulaire (8) est bloqué, le passage étant ouvert vers la sortie BP (3) au travers d'au moins un orifice calibré (9) perçant la soupape (4) et débouchant latéralement dans l'alésage (7) à l'amont du siège (11) de la sortie BP (3) ;
b. pour un débit de l'entrée IN (1) supérieur ou égal au seuil prédéterminé, la soupape (4) se déplace vers le second siège (11) dans une position où elle est à butée contre le second siège (11), fermant la sortie BP (3) et où l'entrée IN (1) est en communication avec la sortie M (2) au travers de la cavité annulaire (8), le premier siège (10) étant libéré par le déplacement de la soupape (4).

3. Système de lubrification selon la revendication 2, **caractérisé en ce que** la soupape (4) est réalisée en au moins deux pièces qui se poussent mutuellement.

4. Système de lubrification selon la revendication 2, **caractérisé en ce que** l'étanchéité d'une sortie quelconque ou des deux sorties de la vanne (22) est réalisée par un principe de recouvrement de type tiroir (13) remplaçant le contact siège-soupape.

5. Système de lubrification selon la revendication 1, **caractérisé en ce que** ladite vanne (22) comporte une soupape (4) coulissant dans un alésage (7) entre deux sièges opposés (23, 24), un premier siège (23) communiquant avec la sortie M (2) et un second siège (24) communiquant avec la sortie BP (3), l'entrée IN (1) débouchant dans l'alésage (7) sur une cavité annulaire entourant le premier siège (23) et l'alésage (7) ou la soupape (4) comprenant au moins un canal calibré (15) entre les deux sièges (23, 24), les éléments de ladite vanne (22) étant dimensionnées de manière telle que :
a. pour un débit de l'entrée IN (1) inférieur au seuil prédéterminé, un ressort (5) maintient ladite soupape (4) à butée contre le premier siège (23), fermant la sortie M (2), le débit étant dévié vers la sortie BP (3) ;
b. pour un débit de l'entrée IN (1) supérieur ou égal au seuil prédéterminé, ladite soupape (4) se déplace vers le second siège (24), ouvrant la sortie M (2) et fermant la sortie BP (3).

6. Système de lubrification selon la revendication 5, **caractérisé en ce que** la soupape (4) est sphérique.

7. Moteur aéronautique comprenant un système de lubrification selon l'une quelconque des revendications précédentes.

8. Moteur aéronautique selon la revendication 7 **caractérisé en ce qu'**il s'agit d'un turboréacteur, d'un turbopropulseur, d'un turboshaft ou moteur d'hélicoptère.

9. Moteur aéronautique selon la revendication 7, **caractérisé en ce que** ledit système de lubrification et ladite vanne (22) sont localisés dans un même carter.

## Claims

1. A lubrication system in a closed circuit, for an aircraft engine, comprising:
- a feed pump (17);
- an oil tank (16);
- a feed circuit (19) supplying the oil to housings (20) containing parts to be lubricated;
- a recovery circuit (21) bringing the oil from the housings (20) back to the tank (16);
- a bypass circuit (18) bringing the oil from the outlet of the feed pump (17) back to the tank (16) or to the inlet of the feed pump (17);
- a three-way valve (22) with two positions, referred to as first position and second position respectively, said three-way valve comprising an IN inlet (1), a first BP outlet (3) and a second M outlet (2), said IN inlet (1) being connected to the outlet of the feed pump (17), the first BP outlet (3) being connected to the bypass circuit (18) and the second M outlet (2) being connected to the feed circuit (19);
**characterized in that**, in the first position, all the flow entering via the IN inlet (1) is diverted to the first BP outlet (3) and, in the second position, all the incoming flow is diverted to the second M outlet (2), said valve switching from the first position to the second position and vice versa, when the incoming flow exceeds a predetermined threshold upwards and downwards respectively.

2. Lubrication system as in Claim 1, **characterized in that** said valve (22) comprises a gate (4) which slides slightly loose in a bore (7) machined into a valve body (6) between two opposite seats (10, 11), a first seat (10) being connected to the IN inlet (1) and a second seat (11) being connected to the BP outlet (3), the M outlet (2) emerging in the bore (7) in a ring-shaped cavity (8) surrounding the first seat (10), so that:
a. for a flow rate in the IN inlet (1) lower than the predetermined threshold, the gate (4) is pushed by a spring (5) on the first seat (10) controlling the IN inlet (1) and the connection from the IN inlet (1) to the ring-shaped cavity (8) is blocked, the connection being opened towards the BP outlet (3) via at least one calibrated opening (9) passing through the gate (4) and emerging laterally in the bore (7) upstream from the seat (11) of the BP outlet (3);
b. for a flow rate from the IN inlet (1) greater than or equal to the predetermined threshold, the gate (4) moves to the second seat (11) in a position where it is in abutment against the second seat (11), closing the BP outlet (3) and where the IN inlet (1) is connected to the M outlet (2) via the ring-shaped, cavity (8), the first seat (10) being released by the movement of the gate (4).

3. Lubrication system as in Claim 2, **characterized in that** the gate (4) is made of at least two parts which push against each other.

4. Lubrication system as in Claim 2, **characterized in that** the tightness of any outlet or of the two outlets of the valve (22) is provided by means of a cover principle of "sliding type" (13) replacing the seat-gate contact.

5. Lubrication system as in Claim 1, **characterized in that** said valve (22) comprises a gate (4) which slides in a bore (7) between two opposite seats (23, 24), a first seat (23) being connected to the M outlet (2) and a second seat (24) being connected to the BP outlet (3), the IN inlet (1) emerging in the bore (7) in a ring-shaped cavity surrounding the first seat (23) and the bore (7) or the gate (4) comprising at least one calibrated channel (15) between the two seats (23, 24), the parts of said valve (22) being proportioned in such a way that :
a. for a flow rate from the IN inlet (1) lower than the predetermined threshold, a spring (5) holds said gate (4) in abutment against the first seat (23), closing the M outlet (2), the flow being diverted towards the BP outlet (3);
b. for a flow rate from the IN inlet (1) greater than or equal to the predetermined threshold, said gate (4) moves to the second seat (24), opening the M outlet (2) and closing the BP outlet (3).

6. Lubrication system as in Claim 5, **characterized in that** the gate (4) is spherical.

7. Aircraft engine comprising a lubrication system as in any of the above claims.

8. Aircraft engine as in Claim 7, **characterized in that** it is a turbojet, a turboprop, a turboshaft or a helicopter engine.

9. Aircraft engine as in Claim 7, **characterized in that** said lubrication system and said valve (22) are located in one same casing.

## Patentansprüche

1. Ein Schmiersystem als geschlossener Kreis für einen Flugzeugmotor, umfassend:
- eine Versorgungspumpe (17),
- einen Öl-Vorratsbehälter (16),
- einen Versorgungskreis (19), der Öl zu Behältern (20) führt, die zu schmierende Elemente enthalten,
- einen Rückgewinnungskreis (21), der das Öl der Behälter (20) zum Vorratsbehälter (16) führt,
- einen Umleitungskreis oder "Bypass" (18), der das Öl vom Ausgang der Versorgungspumpe (17) zum Vorratsbehälter (16) oder zum Eingang der Versorgungspumpe (17) führt,
- einen Schieber (22) mit zwei Stellungen, die jeweils als erste und zweite Stellung bezeichnet werden, und mit drei Wegen, wobei die drei Wege aus einem Eingang IN (1), einem ersten Ausgang BP (3) und einem zweiten Ausgang M (2) bestehen, wobei der Eingang IN (1) mit dem Ausgang der Versorgungspumpe (17) gekoppelt ist, wobei der erste Ausgang BP (3) mit dem Umleitungskreis (18) gekoppelt ist und der zweite Ausgang M (2) mit dem Versorgungskreis (19),
**dadurch gekennzeichnet, dass** in der ersten Stellung der gesamte Durchfluss, der durch ein Eingang IN (1) eintritt, zum ersten Ausgang BP (3) umgeleitet wird und in der zweiten Stellung der gesamte eintretende Durchfluss zum zweiten Ausgang M (2) umgeleitet wird, wobei der Schieber aus der ersten Stellung in die zweite Stellung wechselt und umgekehrt, wenn der eintretende Durchfluss eine vorbestimmte Schwelle jeweils nach oben und nach unten überschreitet.

2. Schmiersystem nach Anspruch 1, **dadurch gekennzeichnet, dass** der Schieber (22) ein Ventil (4) aufweist, das mit einem geringen Spiel in einer Bohrung (7) gleitet, die in einen Schieberkörper (6) zwischen zwei gegenüberliegenden. Sitzen (10, 11) eingearbeitet ist, wobei ein erster Sitz (10) mit dem Eingang IN (1) und ein zweiter Sitz (11) mit dem Ausgang BP (3) in Kommunikation ist, wobei der Ausgang M (2) in die Bohrung (7) über einen ringförmigen Hohlraum (8) mündet, der den ersten Sitz (10) umschließt, so dass:
a. das Ventil (4) für einen Durchfluss am Eingang IN (1) unter der vorbestimmten Schwelle von einer Feder (5) auf den ersten Sitz (10) gedrückt wird, der den Eingang IN (1) kontrolliert, und der Durchgang vom Eingang IN (1) zum ringförmigen Hohlraum (8) blockiert ist, wobei der Durchgang zum Ausgang BP (3) durch mindestens eine kalibrierte Öffnung (9), die durch das Ventil (4) hindurchgeht und seitlich in die Bohrung (7) vor dem Sitz (11) des Ausgangs BP (3) mündet, geöffnet ist,
b. sich das Ventil (4) für einen Durchfluss des Eingangs IN (1) über oder gleich der vordefinierten Schwelle zum zweiten Sitz (11) verlagert in eine Stellung, in der es am zweiten Sitz (11) im Anschlag ist, wobei der Ausgang BP (3) verschlossen wird, und in der der Eingang IN (1) mit dem Ausgang M (2) über den ringförmigen Hohlraum (8) in Kommunikation ist, wobei der erste Sitz (10) durch die Verlagerung des Ventils (4) freigegeben wird.

3. Schmiersystem nach Anspruch 2, **dadurch gekennzeichnet, dass** das Ventil (4) aus mindestens zwei Teilen hergestellt ist, die sich gegenseitig schieben.

4. Schmiersystem nach Anspruch 2, **dadurch gekennzeichnet, dass** die Dichtigkeit eines beliebigen Ausgangs oder der zwei Ausgänge des Schiebers (22) durch ein Abdeckungsprinzip vom Typ Einschub (13) hergestellt wird, das den Kontakt SitzVentil ersetzt.

5. Schmiersystem nach Anspruch 1, **dadurch gekennzeichnet, dass** der Schieber (22) ein Ventil (4) aufweist, das sich in einer Bohrung (7) zwischen zwei gegenüberliegenden Sitzen (23, 24) verlagert, wobei ein erster Sitz (23) mit dem Ausgang M (2) kommuniziert und ein zweiter Sitz (24) mit dem Ausgang BP (3) kommuniziert, wobei der Eingang IN (1) in die Bohrung (7) über einen ringförmigen Hohlraum mündet, der den ersten Sitz (23) umschließt und die Bohrung (7) oder das Ventil (4) mindestens einen kalibrierten Kanal (15) zwischen den zwei Sitzen (23, 24) umfassen, wobei die Elemente des Schiebers (22) derart bemessen sind, dass:
a. für einen Durchfluss des Eingangs IN (1) unter der vorbestimmten Schwelle eine Feder (5) das Ventil (4) im Anschlag gegen den ersten Sitz (23) hält, so dass der Ausgang M (2) geschlossen ist, wobei der Durchfluss zum Ausgang BP (3) umgeleitet wird,
b. sich das Ventil (4) für einen Durchfluss des Eingangs IN (1) über oder gleich der vorbestimmten Schwelle zum zweiten Sitz (24) verlagert, so dass der Ausgang M (2) geöffnet und der Ausgang BP (3) geschlossen wird.

6. Schmiersystem nach Anspruch 5, **dadurch gekennzeichnet, dass** das Ventil (4) kugelig ist.

7. Flugzeugmotor, der ein Schmiersystem nach einem der vorangehenden Ansprüche umfasst.

8. Flugzeugmotor nach Anspruch 7, **dadurch gekennzeichnet, dass** es sich um ein Turbotriebwerk, ein Turboprop-Triebwerk, ein Turboshaft-Triebwerk oder einen Hubschraubermotor handelt.

9. Flugzeugmotor nach Anspruch 7, **dadurch gekennzeichnet, dass** sich das Schmiersystem und der Schieber (22) in demselben Gehäuse befinden.
